# DEMANDE DE BREVET EUROPEEN

(11) **EP 1 300 447 A1**
(43) Date de publication de la demande: **09.04.2003**
(21) Numéro de dépôt: 02292288.4
(22) Date de dépôt: 18.09.2002
(51) Int. Cl.: C08L 101/02, C08L 51/06, H01B 3/44

(54) **Composition polymère supramoléculaire, ainsi que son procédé de fabrication et cable comportant une telle composition**

(30) Priorité: 03.10.2001 FR 0112934
(71) Demandeur: Nexans, 75008 Paris (FR)
(72) Inventeur: Fomperie, Lionel, 78160 Auffargis (FR); Bouteiller, Laurent, 92340 Bourg la Reine (FR); Colombani, Olivier, 91120 Palaiseau (FR)
(74) Mandataire: Lenne, Laurence

(57) **Abrégé**

La présente invention se rapporte à une composition polymère supramoléculaire ainsi qu'un procédé permettant la fabrication d'une telle composition destinée notamment à être employée dans la câblerie. La composition polymère supramoléculaire selon l'invention comprend:
- une première chaîne polymérique sur laquelle est greffé au moins un premier groupement fonctionnel,
- une deuxième chaîne polymérique sur laquelle est greffé au moins un deuxième groupement fonctionnel,
les premier et deuxième groupements fonctionnels étant associés entre eux par au moins une liaison intermoléculaire de type hydrogène.

## Description

La présente invention se rapporte à une composition polymère supramoléculaire ainsi qu'un procédé permettant la fabrication d'une telle composition destinée notamment à être employée dans les accessoires de câbles ou comme gaine et/ou isolation de câbles de télécommunications ou de câbles d'énergie.

Pour ce type d'utilisation, on cherche des compositions qui présentent de bonnes propriétés thermomécaniques.

De manière connue, les compositions répondant le mieux à ce critère sont à base de polymères réticulés dans lesquels une structure tridimensionnelle est formée par liaisons covalentes entre les chaînes.

Des compositions à base de polymères réticulés sont obtenues à l'aide de silanes tels que le vinyle silane souvent greffé sur les polymères. Un tel procédé de réticulation implique en particulier après l'extrusion une immersion de la composition dans une piscine d'eau chauffée. Par conséquent, une telle immersion étant particulièrement onéreuse et nécessitant des infrastructures spécifiques, la durée de fabrication des câbles contenant une telle composition est longue et peu compatible avec les exigences industrielles. En outre, la composition obtenue est généralement difficilement recyclable à cause de la présence de ponts de réticulation qui sont des liaisons de type C-Si-O-Si-C.

D'autres compositions à base de polymères réticulés sont obtenues par voie peroxydique. Ceci nécessite après l'extrusion une décomposition du peroxyde sous pression gazeuse et à haute température dans de longs tubes dits de vulcanisation. Cette décomposition conditionne la réticulation. De plus, la pression gazeuse peut altérer certaines propriétés des polymères (déformation de l'isolation...). Par conséquent, la voie peroxydique conduit à des compositions onéreuses et d'utilisation limitée. En outre, la composition obtenue est généralement difficilement recyclable du fait des liaisons covalentes de type C-C.

En outre, les agents de réticulation tels que le silane ou le peroxyde sont introduits soit lors du « compoundage », c'est-à-dire lors de l'élaboration de la composition dans un mélangeur interne, soit au début de l'étape suivante d'extrusion. La température d'extrusion doit être inférieure à la température de décomposition du peroxyde ou de condensation du silane conduisant à une pré-réticulation de la composition dégradant ses propriétés finales. La composition est donc assez visqueuse de sorte que la vitesse d'extrusion est peu élevée.

Ainsi, les compostions de l'art antérieur sont obtenues après une série d'étapes complexes et coûteuses et sont peu recyclables.

La présente invention a pour but de mettre au point une composition moins coûteuse que celles à base de polymères réticulés connues, de fabrication simple, rapidement extrudable, recyclable, et possédant de bonnes propriétés thermomécaniques.

Un premier objet de la présente invention est donc une composition polymère supramoléculaire comprenant :
- une première chaîne polymérique sur laquelle est greffé au moins un premier groupement fonctionnel,
- une deuxième chaîne polymérique sur laquelle est greffé au moins un deuxième groupement fonctionnel,
lesdits premier et deuxième groupements fonctionnels étant associés entre eux par au moins une liaison intermoléculaire de type hydrogène.

Une composition polymère supramoléculaire selon l'invention comprend au moins deux chaînes polymériques appartenant à un même polymère ou à deux polymères distincts. La composition peut utiliser une vaste gamme de polymères qui sont, en fonction des applications souhaitées, avec ou sans ramification, chargés ou non, et de préférence parmi les plus répandus et les moins coûteux. De même, on choisit des groupements fonctionnels appropriés (faible coût, facilité de greffage sur les chaînes,...).

Le ou les polymères selon l'invention possèdent une structure tridimensionnelle qui n'est pas formée par liaisons covalentes entre les chaînes à l'image des polymères réticulés mais par liaison(s) intermoléculaire(s) de type hydrogène. Ainsi, la composition polymère supramoléculaire selon invention forme un édifice supramoléculaire reposant sur des liaisons intermoléculaires résultant par exemple de l'attraction électrostatique entre deux molécules partiellement chargées et de signes opposés, l'une appartenant au premier groupement fonctionnel selon l'invention et l'autre au deuxième groupement fonctionnel.

Les liaisons intermoléculaires peuvent être suffisamment fortes pour procurer à la composition une tenue élevée au fluage avec la température et lui assurer une bonne stabilité à long terme. Ceci est particulièrement intéressant pour la fabrication de gaines ou d'isolations de câbles. De plus, la composition selon l'invention permet d'obtenir facilement des produits finis ayant une grande souplesse.

Contrairement à l'art antérieur, la fabrication de la composition polymère supramoléculaire selon l'invention ne nécessite pas une immersion dans de l'eau ou des traitements thermiques spécifiques. L'étape de greffage des premier et deuxième groupements fonctionnels peut se réaliser au moment du compoundage et à température ambiante. Ceci permet de minimiser le nombre d'étapes de fabrication et d'utiliser les équipements existants. De cette manière, les coûts sont réduits et la fabrication simple et rapide. Contrairement à l'art antérieur, la viscosité n'est pas augmentée de sorte qu'il est possible d'augmenter la vitesse d'extrusion.

En outre, une liaison intermoléculaire se rompt plus facilement qu'une liaison covalente par exemple lors d'une extrusion qui combine une élévation de température et un fort cisaillement.

Lorsque les sollicitations cessent, les liaisons sont susceptibles de se reformer. Ainsi, la formation de l'édifice supramoléculaire d'une composition selon l'invention peut être réversible et spontané (sans nécessité de catalyseur). De cette manière, la composition selon l'invention permet d'obtenir des produits finis qui sont recyclables : les propriétés initiales des constituants de base selon l'invention n'étant pas altérées, ces derniers sont réutilisables. Notamment, le ou les polymères selon l'invention sont plus facilement recyclables que les polymères réticulés de l'art antérieur.

Dans un mode de réalisation préféré, la composition selon l'invention peut comprendre en outre un troisième groupement fonctionnel associé avec au moins l'un des premier ou deuxième groupements fonctionnels par au moins une liaison intermoléculaire de type hydrogène.

Ceci permet notamment de modifier les conditions de dissociation des liaisons intermoléculaires afin de renforcer l'édifice supramoléculaire.

Avantageusement, les groupements fonctionnels peuvent être choisis parmi les urées et de préférence parmi les bisurées.

Les urées telles que les bisurées sont des groupements de petites molécules faisant actuellement l'objet de recherches fondamentales. Ces bisurées sont notamment présentées par S. Boileau et autres, « Soluble Supramolecular Polymers Bases On Urea compounds », New Journal of Chemistry, 2000, 24, pages 845-848. Ce document divulgue certains procédés de synthèse de bisurées symétriques (schéma 1c), par exemple par réaction d'un diisocyanate avec une amine appropriée. En milieu solvant tel que l'heptane, le tétrachlorure de carbone ou le dichlorométhane, il est mentionné que ces bisurées sont susceptibles de s'associer entre elles par des liaisons hydrogène issues de l'interaction d'un atome d'oxygène d'une part et deux atomes d'hydrogène d'autre part (schéma 1 d).

Ainsi, en greffant sur les première et deuxième chaînes polymériques ces petites molécules de type bisurée et en créant des conditions favorables pour la formation des liaisons hydrogène, on obtient une composition polymère supramoléculaire selon l'invention.

Dans un mode de réalisation préféré, la bisurée comprenant un groupement dit groupement espaceur disposé entre deux fonctions urées, ledit groupement espaceur est le 1-méthyl 2,4-phénylène.

De préférence, le premier groupement fonctionnel peut être identique au deuxième groupement fonctionnel.

Il peut être avantageux de greffer des bisurées identiques sur les première et deuxième chaînes polymériques selon l'invention. D'une part, leur association est déjà expérimentée, et d'autre part, cela réduit le nombre de constituants différents dans la composition selon l'invention.

Selon l'invention, chacune des première et deuxième chaînes polymériques appartient à un polymère choisi parmi les polymères amorphes, les polymères au moins partiellement cristallins, et de préférence les homopolymères d'éthylène, les copolymères d'éthylène et d'acétate de vinyle et les silicones.

Un polymère cristallin confère à la composition selon l'invention des bonnes propriétés mécaniques car il contribue à renforcer sa structure. Un polymère cristallin peut être un homopolymère d'une oléfine ayant de 2 à 6 atomes de carbone ou un copolymère de deux oléfines ayant chacune de 2 à 6 atomes de carbone, ces oléfines pouvant être par exemple, l'éthylène, le propylène, le butène, le pentène, l'hexène, l'isobutylène, le méthyl-butène, le méthyl-pentène, le diméthyl-butène ou l'éthyl-butène. En général, on utilise du polyéthylène, de préférence du polyéthylène haute densité (PEHD) car ce sont des polymères de grande diffusion donc peu onéreux et possédant des caractéristiques diélectriques compatibles avec les spécifications nécessaires à l'élaboration de matériaux pour les câbles d'énergie.

Un polymère amorphe confère à la composition selon l'invention de la souplesse. Comme exemples de tels polymères pouvant entrer dans la composition selon l'invention, on peut citer les copolymères d'un composé à insaturation éthylénique tel que l'éthylène et un ester insaturé, tels que les copolymères d'éthylène et d'acétate de vinyle (EVA), les copolymères d'éthylène et de propionate de vinyle, les copolymères d'éthylène et d'acétate d'allyle, les copolymères d'éthylène et de propionate d'allyle.

On utilise de préférence le copolymère d'EVA pour ses propriétés de souplesse, sa capacité à accepter des taux importants de charge donnant ainsi un matériau ignifugé. On peut choisir en variante les copolymères d'éthylène et de butyle acrylate (EBA), les copolymères d'éthylène et d'éthyle acrylate (EEA), les copolymères d'éthylène et de méthyle acrylate (EMA), les terpolymères éthylène-propylène-diène monomère (EPDM), les copolymères d'éthylène et de propylène (EPR). La composition peut aussi contenir un polymère fonctionnalisé du type PE, un copolymère d'éthylène, tel qu'un EVA ou un EPR, un PP ou un copolymère de propylène, qui porte une fonctionnalité par exemple greffée telle que l'époxy, l'anhydride, l'acide acrylique.

De manière avantageuse, le premier groupement fonctionnel peut porter au moins un premier groupement sélectivement réactif avec la première chaîne polymérique, le deuxième groupement fonctionnel peut porter au moins un deuxième groupement sélectivement réactif avec la deuxième chaîne polymérique, les premier et deuxième groupements réactifs étant choisis parmi les alcoxysilanes, les vinyles, les silanes, les époxy, les amines et les isocyanates.

Les premier et deuxième groupements réactifs varient en conséquence suivant la nature des chaînes polymériques porteuses du greffage.

Dans un mode de réalisation préféré, le premier groupement fonctionnel porte un seul premier groupement sélectivement réactif avec la première chaîne polymérique, le deuxième groupement fonctionnel porte un seul deuxième groupement sélectivement réactif avec la deuxième chaîne polymérique, les premier et deuxième groupements réactifs étant choisis parmi les alcoxysilanes, les vinyles, les silanes et les époxy, les amines et isocyanates.

Un seul greffage par groupement fonctionnel permet de fixer plus librement les conditions de dissociations des liaisons intermoléculaires. Dans un mode de réalisation, la composition selon l'invention comprend un catalyseur de greffage choisi parmi les amines, les composés à base de platine, les composés à base d'étain et de préférence les sels d'étain.

Dans un mode de réalisation préféré, la composition selon l'invention peut comprendre en outre au moins une charge.

La charge peut être une charge réactive telle que la magnésie réactive en surface, l'alumine, le kaolin et le mica d'une part, ou non réactive d'autre part telle que la craie, du noir de carbone, de la magnésie non réactive et de l'argile naturelle ou synthétique.

Dans un mode de réalisation préféré, une composition selon l'invention comporte une première chaîne polymérique d'EVA sur laquelle est greffée au moins une première bisurée portant un alcoxysilane et une deuxième chaîne polymérique d'EVA sur laquelle est greffée au moins une deuxième bisurée portant un alcoxysilane.

Un second objet de la présente invention est un procédé de fabrication d'une composition polymère supramoléculaire contenant une pluralité de groupements fonctionnels, le procédé comportant
- une étape de greffage d'un premier groupement fonctionnel sur une première chaîne polymérique, et une étape de greffage d'un deuxième groupement fonctionnel sur une deuxième chaîne polymérique,
- une étape dite d'association des premier et deuxième groupements fonctionnels par au moins une liaison intermoléculaire de type hydrogène.

Le procédé de fabrication selon l'invention présente des avantages déjà mentionnés :
- une mise en oeuvre à température ambiante, sans immersion dans de l'eau à partir des installations existantes,
- une augmentation de la vitesse d'extrusion de la composition obtenue du fait de la faible viscosité de la composition.

L'étape de greffage et l'étape d'association sont de préférence réalisées au moment du compoundage.

L'obtention d'une composition polymère supramoléculaire étant de plus réversible et spontané, une deuxième étape d'association peut intervenir après l'extrusion. Lors des étapes d'association du procédé selon l'invention, il peut se former des liaisons intermoléculaires entre d'un côté l'un et/ou l'autre des groupements fonctionnels greffés et de l'autre côté des groupements non greffés ce qui renforce l'édifice supramoléculaire de la composition.

Avantageusement, les groupements fonctionnels peuvent être choisis parmi les urées et de préférence les bisurées et les premier et deuxième groupements fonctionnels peuvent être de préférence identiques.

Dans un procédé de fabrication selon l'invention, l'étape de greffage peut être réalisée en présence d'un catalyseur de greffage choisi parmi les amines, les composés à base de platine, les composés à base d'étain et de préférence les sels d'étain.

Selon l'invention :
- chacune desdites première et deuxième chaînes polymériques peut appartenir à un polymère choisi parmi les élastomères, les polymères thermoplastiques, et de préférence les homopolymères d'éthylène, les copolymères d'éthylène et d'acétate de vinyle et les silicones,
- le premier groupement fonctionnel peut comprendre un premier groupement sélectivement réactif avec le premier polymère,
- ledit deuxième groupement fonctionnel peut comprendre un groupement sélectivement réactif avec le deuxième polymère,
lesdits premier et deuxième groupements réactifs pouvant être choisis parmi les alcoxysilanes, les vinyles, les silanes, les époxy, les amines et les isocyanates.

Dans un procédé de fabrication selon l'invention, l'étape de greffage est réalisée en présence de peroxyde.

Par exemple, le peroxyde sera préférentiellement choisi afin de greffer des groupements réactifs tels que les vinyles sur une polyoléfine telle que le polyéthylène.

Dans un procédé de fabrication selon l'invention, au moins une charge peut être ajoutée durant l'une des étapes de greffage et d'association.

L'extrusion de la composition selon l'invention peut avantageusement être réalisée d'une façon appropriée pour produire divers produits finis bénéficiant des propriétés mécaniques et de résistance à la chaleur que possède la composition selon l'invention.

Comme exemples de tels produits finis, on peut mentionner les câbles d'énergie ou de télécommunications dont l'isolation et/ou la gaine peut contenir la composition selon l'invention.

L'invention sera mieux comprise à l'aide des exemples suivants de composition et de procédé selon l'invention, donnés à titre indicatif et nullement limitatif.

### Exemple 1

La composition polymère supramoléculaire selon l'invention est obtenue à partir des constituants suivants :
- une première chaîne polymérique d'un EVA,
- une première bisurée portant un alcoxysilane sélectivement réactif avec la première chaîne polymérique,
- une deuxième chaîne polymérique du même EVA distincte de la première chaîne polymérique,
- une deuxième bisurée portant un alcoxysilane sélectivement réactif avec la deuxième chaîne polymérique.

La formule partielle développée de chaque première et deuxième chaîne polymérique d'EVA est la suivante:

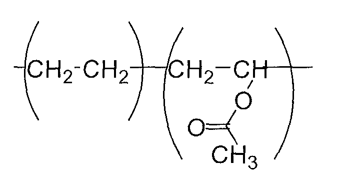

De préférence, chaque première et deuxième bisurée dissymétrique monofonctionnelle est un (2,6-diéthylphényl, 3-(diméthyléthoxysilane)-propyl) uréido toluène, qui comporte d'un côté le groupement 3-(diméthyléthoxysilane)-propyl sélectivement réactif avec l'EVA et de l'autre côté le groupement 2,6-diéthylphényl non réactif avec l'EVA. Un groupement espaceur qui correspond au 1-méthyl 2,4-phénylène est disposé entre les deux fonctions urées.

La formule développée de cette bisurée s'écrit comme suit : 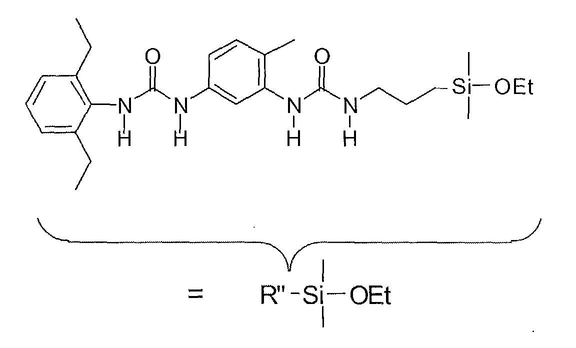 dans laquelle Et correspond à un groupement éthyl. La formule non développée de la bisurée est R"SiOEt.

Les greffages de la première bisurée sur la première chaîne polymérique de l'EVA, et de la deuxième bisurée sur la deuxième chaîne polymérique de l'EVA interviennent lors du compoundage entre 140°C et 210°C en présence d'un catalyseur à base d'étain tel que le dilauréate de dibutyl étain (DBTL).

La formule partielle de l'EVA greffé bisurée est la suivante :

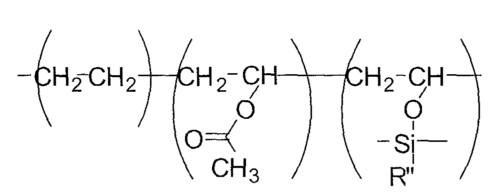

De même, une auto-association de la première bisurée avec la deuxième bisurée par au moins une liaison hydrogène, quatre liaisons hydrogène dans cet exemple, est réalisée lors du compoundage.

Ensuite, lors de l'extrusion sans précautions particulières, les deux bisurées peuvent se dissocier puis s'associer à nouveau spontanément après l'extrusion.

On constate que les propriétés thermomécaniques ainsi que la tenue au fluage ou déformation sont bonnes. La dureté SHORE A est faible, ce qui est avantageux, notamment dans le cas d'une utilisation comme gaine ou isolation pour câbles.

Cette composition peut être ensuite remise en oeuvre (extrudée à nouveau) à tout moment et conserve des propriétés mécaniques intactes.

### Exemple 2

De manière analogue à l'exemple 1, une composition polymère supramoléculaire selon l'invention est obtenue à partir des constituants suivants :
- une première chaîne polymérique d'un EVA,
- une première bisurée portant un alcoxysilane sélectivement réactif avec la première chaîne polymérique,
- une deuxième chaîne polymérique du même EVA distincte de la première chaîne polymérique,
- une deuxième bisurée portant un alcoxysilane sélectivement réactif avec la deuxième chaîne polymérique,
- une troisième bisurée sans groupement sélectivement réactif avec l'EVA telle que la bis(2-éthylhexyl) uréido toluène correspondant à une bisurée symétrique comportant un groupement non réactif 2-éthyl hexyl de chaque côté et de formule développée suivante:

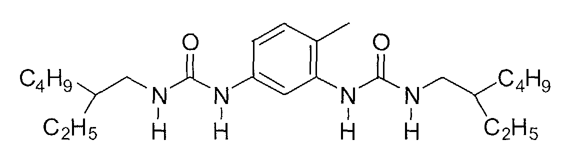

Les greffages de la première bisurée sur la première chaîne polymérique de l'EVA, et de la deuxième bisurée sur la deuxième chaîne polymérique de l'EVA interviennent lors du compoundage.

De même, une association de la première bisurée avec la deuxième bisurée par quatre liaisons hydrogène est réalisée lors du compoundage ainsi qu'une association de la troisième bisurée avec la première et/ou la deuxième bisurée par au moins une liaison hydrogène.

Ensuite, lors de l'extrusion sans précautions particulières, les bisurées peuvent se dissocier puis s'associer à nouveau spontanément après l'extrusion,

Les propriétés thermomécaniques ainsi que la tenue au fluage ou déformation sont bonnes et la dureté SHORE A est faible, ce qui est avantageux, notamment dans le cas d'une utilisation comme gaine ou isolation pour câbles.

### Exemple 3

De manière analogue à l'exemple 1, une composition polymère supramoléculaire selon l'invention est obtenue à partir des constituants suivants :
- une première chaîne polymérique d'un polyéthylène (PE),
- une première bisurée portant un vinyle sélectivement réactif avec la première chaîne polymérique, telle que la bisurée dissymétrique monofonctionnelle comportant un groupement 4-nbutylphényl d'un côté et allylique réactif de l'autre côté, de formule développée suivante : 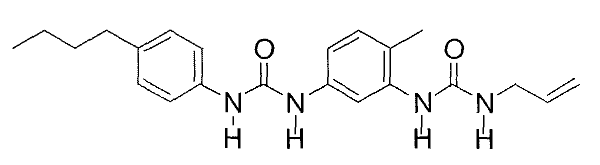
- une deuxième chaîne polymérique du même PE distincte de la première chaîne polymérique,
- une deuxième bisurée portant un vinyle sélectivement réactif avec la deuxième chaîne polymérique, par exemple identique à la deuxième bisurée.

Les greffages de la première bisurée sur la première chaîne polymérique de PE, et de la deuxième bisurée sur la deuxième chaîne polymérique de PE interviennent lors du compoundage en présence de peroxyde.

De même, une association de la première bisurée avec la deuxième bisurée par quatre liaisons hydrogène est réalisée lors du compoundage.

Ensuite, lors de l'extrusion sans précautions particulières, les bisurées peuvent se dissocier puis s'associer à nouveau spontanément après l'extrusion.

Les propriétés thermomécaniques ainsi que la tenue au fluage ou déformation sont bonnes et la dureté SHORE A est faible, ce qui est avantageux, notamment dans le cas d'une utilisation comme gaine ou isolation pour câbles.

### Exemple 4

Une composition polymère supramoléculaire selon l'invention est obtenue à partir des constituants suivants :
- une première chaîne polymérique d'un silicone comportant un nombre m supérieur ou égal à un de fonction(s) amine(s) pendante(s), par exemple de formule développée suivante : 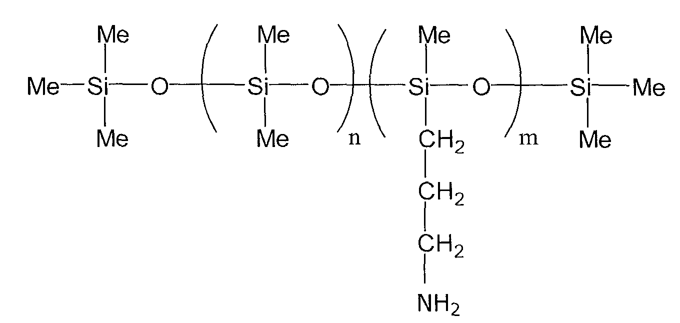
dans laquelle les groupements Me correspondent à des groupements méthyl,
- une première molécule avec un groupement sélectivement réactif avec la première chaîne polymérique, par exemple une urée précurseur d'une première bisurée telle que la (BuP/NCO) monoisocyanate qui comporte une urée et un groupement 4-nbutylphényl, de formule développée suivante : 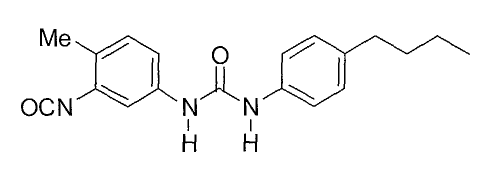
- une deuxième chaîne polymérique du même silicone distincte de la première chaîne polymérique,
- une deuxième molécule identique à la première molécule et précurseur d'une deuxième bisurée, comportant un groupement sélectivement réactif avec la deuxième chaîne polymérique.

Les greffages de la première bisurée sur la première chaîne polymérique du silicone par réaction du mono isocyanate avec l'une des fonctions amines, et de la deuxième bisurée sur la deuxième chaîne polymérique du silicone par réaction du mono isocyanate avec l'une des fonctions amines interviennent en solution dans le tétrahydrofurane (THF) à température ambiante.

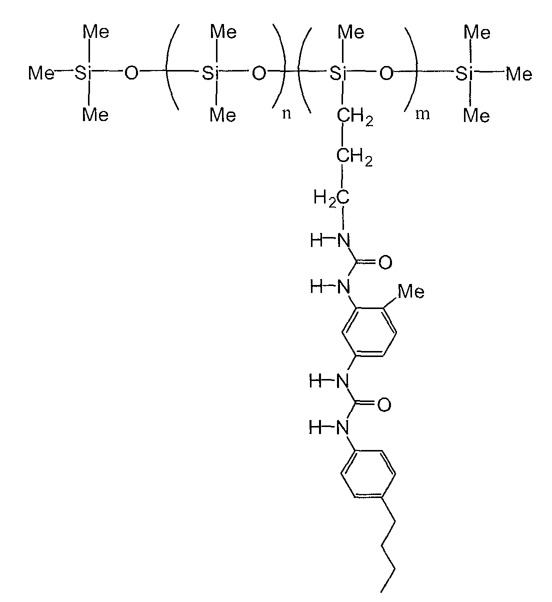

Une auto-association de la première bisurée avec la deuxième bisurée par quatre liaisons hydrogène est réalisée lors de la purification du produit.

Ensuite, lors de l'extrusion sans précautions particulières, les première et deuxième bisurées peuvent se dissocier puis s'associer à nouveau spontanément après l'extrusion.

On constate que les propriétés thermomécaniques ainsi que la tenue au fluage ou déformation sont bonnes. La dureté SHORE A est faible, ce qui est avantageux, notamment dans le cas d'une utilisation comme gaine ou isolation pour câbles.

La composition peut être ensuite remise en oeuvre (extrudée à nouveau) à tout moment et conserve des propriétés mécaniques intactes.

### Exemple 5

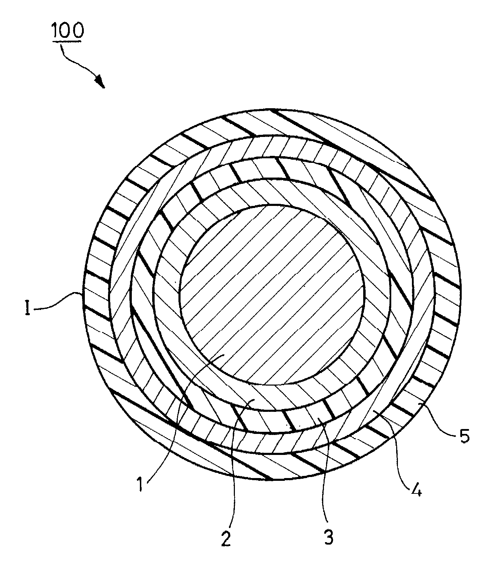

On fabrique un câble d'énergie moyenne tension comportant une gaine contenant la composition polymère supramoléculaire obtenue par le procédé selon l'invention. La figure unique représente une section de ce câble d'énergie 100.

Le câble d'énergie 100 comporte une âme conductrice 1 entourée d'une structure d'isolement I qui lui est coaxiale. Par exemple, cette structure I comporte au moins une première couche semi-conductrice 2 placée au contact de l'âme 1 du câble 100, elle-même entourée d'une deuxième couche 3 électriquement isolante, à son tour recouverte par une troisième couche semi-conductrice 4. La couche extérieure 5 est une gaine qui sert à la protection du câble 100 et contient la composition polymère supramoléculaire selon la présente invention.

On réalise un mélange des constituants indiqués dans l'exemple 1 en mélangeur continu ou discontinu puis la composition est mise en oeuvre par extrusion. La matière est transportée à l'aide d'une vis de la zone d'alimentation jusqu'à la filière. La matière se plastifie sous l'action du malaxage induit par la rotation de la vis et de la chaleur apportée de l'extérieur. La pression augmente progressivement le long de la vis forçant ainsi la matière à passer par la filière pour lui donner une forme figée en sortie de cette dernière. Cette technique permet grâce à l'adaptation d'une tête de filière appropriée de recouvrir des fils cuivre ou des fils préalablement isolés.

La composition formant la gaine du câble peut être ensuite remise en oeuvre, c'est-à-dire extrudée à nouveau pour former une nouvelle gaine, à tout moment par exemple après six mois ou plus d'utilisation du câble. La gaine réalisée avec la composition recyclée conserve des propriétés mécaniques semblables à celle de la première gaine car les propriétés initiales des constituants selon l'invention ne sont pas altérées.

Les compositions polymères supramoléculaires selon l'invention s'appliquent également à la réalisation d'isolation de câbles d'énergie basse, moyenne, haute ou très haute tension ainsi qu'à la réalisation de gaines de protection non seulement de câbles d'énergie (basse, moyenne, haute ou très haute tension) mais également de câbles de télécommunications.

## Revendications

1. Composition polymère supramoléculaire comprenant :
- une première chaîne polymérique sur laquelle est greffé au moins un premier groupement fonctionnel,
- une deuxième chaîne polymérique sur laquelle est greffé au moins un deuxième groupement fonctionnel,
lesdits premier et deuxième groupements fonctionnels étant associés entre eux par au moins une liaison intermoléculaire de type hydrogène.

2. Composition selon la revendication 1 **caractérisée en ce qu'**elle comprend en outre un troisième groupement fonctionnel associé avec au moins l'un desdits premier et deuxième groupements fonctionnels par au moins une liaison intermoléculaire de type hydrogène.

3. Composition selon l'une des revendications 1 ou 2 lesdits groupements fonctionnels sont choisis parmi les urées et de préférence parmi les bisurées.

4. Composition selon la revendication 3 **caractérisée en ce que**, la bisurée comprenant un groupement dit groupement espaceur disposé entre deux fonctions urées, ledit groupement espaceur est le 1-méthyl 2,4-phénylène.

5. Composition selon l'une des revendications 1 à 4 **caractérisée en ce que** ledit premier groupement fonctionnel est identique audit deuxième groupement fonctionnel.

6. Composition selon l'une des revendications 1 à 5 **caractérisée en ce que** chacune desdites première et deuxième chaînes polymériques appartient à un polymère choisi parmi les polymères amorphes, les polymères au moins partiellement cristallins, et de préférence les homopolymères d'éthylène, les copolymères d'éthylène et d'acétate de vinyle et les silicones.

7. Composition selon l'une des revendications 1 à 6 **caractérisée en ce que** :
- ledit premier groupement fonctionnel porte au moins un premier groupement sélectivement réactif avec ladite première chaîne polymérique,
- ledit deuxième groupement fonctionnel porte au moins un deuxième groupement sélectivement réactif avec ladite deuxième chaîne polymérique,
lesdits premier et deuxième groupements réactifs étant choisis parmi les alcoxysilanes, les vinyles, les silanes, les époxy, les amines et les isocyanates.

8. Composition selon l'une des revendications 1 à 7 **caractérisée en ce que** :
- ledit premier groupement fonctionnel porte un premier groupement sélectivement réactif avec ladite première chaîne polymérique,
- ledit deuxième groupement fonctionnel porte un deuxième groupement sélectivement réactif avec ladite deuxième chaîne polymérique,
lesdits premier et deuxième groupements réactifs étant choisis parmi les alcoxysilanes, les vinyles, les silanes, les époxy, les amines et les isocyanates.

9. Composition selon l'une des revendications 1 à 8 **caractérisée en ce qu'**elle comprend un catalyseur de greffage choisi parmi les amines, les composés à base de platine, les composés à base d'étain et de préférence les sels d'étain.

10. Composition selon l'une des revendications 1 à 9 **caractérisée en ce qu'**elle comprend en outre au moins une charge.

11. Composition selon l'une des revendications 1 à 10 **caractérisée en ce qu'**elle comporte une première chaîne polymérique d'EVA sur laquelle est greffée au moins une première bisurée portant un alcoxysilane et une deuxième chaîne polymérique d'EVA sur laquelle est greffée au moins une deuxième bisurée portant un alcoxysilane.

12. Procédé de fabrication d'une composition polymère supramoléculaire contenant une pluralité de groupements fonctionnels, ledit procédé comportant
- une étape de greffage d'un premier desdits groupements fonctionnels sur une première chaîne polymérique, et une étape de greffage d'un deuxième desdits groupements fonctionnels sur une deuxième chaîne polymérique,
- une étape dite d'association desdits premier et deuxième groupements fonctionnels par au moins une liaison intermoléculaire de type hydrogène.

13. Procédé de fabrication selon la revendication 12 **caractérisée en ce que** lesdits groupements fonctionnels sont choisis parmi les urées et de préférence les bisurées et **en ce que** lesdits premier et deuxième groupements fonctionnels sont de préférence identiques.

14. Procédé de fabrication selon l'une des revendications 12 ou 13 **caractérisé en ce que** ladite étape de greffage est réalisée en présence d'un catalyseur de greffage choisi parmi les amines, les composés à base de platine, les composés à base d'étain et de préférence les sels d'étain.

15. Procédé de fabrication selon l'une des revendications 12 à 14 **caractérisée en ce que** :
- chacune desdites première et deuxième chaînes polymériques appartient à un polymère choisi parmi les élastomères, les polymères thermoplastiques, et de préférence les homopolymères d'éthylène, les copolymères d'éthylène et d'acétate de vinyle et les silicones,
- ledit premier groupement fonctionnel comprend un premier groupement sélectivement réactif avec ladite première chaîne polymérique,
- ledit deuxième groupement fonctionnel comprend un deuxième groupement sélectivement réactif avec ladite deuxième chaîne polymérique,
- lesdits groupements réactifs étant de préférence identique et choisis parmi les alcoxysilanes, les vinyles, les silanes, les époxy, les amines et les isocyanates.

16. Procédé de fabrication selon l'une des revendications 12 à 15 **caractérisé en ce que** ladite étape de greffage est réalisée en présence de peroxyde.,

17. Procédé de fabrication selon l'une des revendications 11 à 16 **caractérisé en ce qu'**au moins une charge est ajoutée durant l'une desdites étapes de greffage et d'association.

18. Câble (100) comprenant une isolation et/ou une gaine (5) contenant la composition polymère supramoléculaire obtenue par le procédé selon l'une des revendications 12 à 17.
